# EUROPEAN PATENT APPLICATION

(11) **EP 4 318 062 A1**
(43) Date of publication of application: **07.02.2024**
(21) Application number: 22188753.2
(22) Date of filing: 04.08.2022
(51) Int. Cl.: G02B 6/122, G02B 6/138, G02B 6/12, G02B 6/26

(54) **OPTICAL INTERPOSER**

(71) Applicant: Vrije Universiteit Brussel, 1050 Brussel (BE)
(72) Inventor: The designation of the inventor has not yet been filed
(74) Representative: Winger

(57) **Abstract**

An optical interposer (1) for optically interconnecting a first optical waveguide (61) with a second optical waveguide (62), the optical interposer (1) comprising: an interposer waveguide (2) having a first end for optically connecting to the first optical waveguide (61) and a second end for optically connecting to the second optical waveguide (62), wherein the interposer waveguide (2) is one of or a combination of a microstructured optical waveguide and graded-index optical waveguide, an interposer substrate (4), and at least one support structure (3) rigidly connecting the interposer waveguide (2) to the interposer substrate (4), so as to form a rigid, self-sustaining optical interposer (1).

## Description

### Technical field of the invention

The present invention relates to the field of optical waveguides for optically connecting different optical components, e.g., photonic integrated circuits, to each other.

### Background of the invention

Photonic integrated circuits (PICs) are revolutionizing science and technology. However, no single PIC material platform can provide all the desired functionalities, so that a combination of different PIC platforms is often required. In the state of the art, mainly two techniques are known for optically connecting the optical waveguides of two different PICs to each other. In a first technique called hybrid integration, two separate chips are prepared, and then optically connected to each other. In a second technique called heterogeneous integration, an unprocessed (e.g. III-V) semiconductor chip is lithographically integrated on top of a processed (e.g. silicon) chip.

Hybrid integration may be achieved by means of a flip-chip design for vertical coupling of the two PICs with integrated mirrors and gratings. Alternatively, hybrid integration may be achieved with a direct butt-coupling approach in which both PICs need to have custom spot-size converters to maximize the modal overlap between their different types of waveguides. Flip-chip and direct butt-coupling approaches use complex design, hard-to-fabricate, and relatively large, custom on-chip coupling features, taking up a large part of the chip real estate, to efficiently couple the different PICs to each other. Indeed, both flip-chip integration and the direct butt-coupling approach rely on a customized modification of the chip design to accommodate these specific coupling features, which is often not part of the component and layout library offered by generic PIC foundries in their multi-project wafer runs.

Another hybrid integration approach known in the art is using two-photon polymerization (2PP)-based direct laser written (DLW) waveguide structures, so-called photonic wire bonds, that enable permanent interconnections between different types of chips and fibers, all through passive alignment (i.e., without optimizing towards the highest power transmission during alignment), with computer vision algorithms. As a result, these photonic wire bonds have limited achievable coupling efficiencies because of the very tight (sub-micrometer) alignment tolerances. Furthermore, these photonic wire bonds are fragile (i.e., lack mechanical robustness) and are susceptible to contamination. Moreover, the direct connection approach with printed optical wire bonds works particularly well for ridge-type waveguides, but it is much more difficult to implement connections to other types of waveguides, such as buried waveguides. In addition, the air-cladded waveguide configuration of photonic wire bonds can lead to undesired contamination of the guided core and light leakage, while the unprotected and sometimes unsupported core is also mechanically very fragile.

There is thus still a need in the art for devices and methods that address at least some of the above problems.

### Summary of the invention

It is an object of the present invention to provide a good optical interposer for optically interconnecting a first optical waveguide with a second optical waveguide, and an integrated system comprising said optical interposer. It is a further object of the present invention to provide a good method for forming said optical interposer, and a good method for forming said integrated system.

The above objective is accomplished by a method and apparatus according to the present invention.

It is an advantage of embodiments of the present invention that the optical interposer enables an efficient combination of waveguides, e.g., optical fibers or photonic integrated circuits, thus efficiently obtaining optical devices with required functionalities. It is a further advantage of embodiments of the present invention that the optical interposer provides trustworthy and efficient hybrid integration of different photonic integrated circuits.

It is an advantage of embodiments of the present invention that strong connections are provided between different waveguides, e.g., of different photonic integrated circuits, the connections thus having a good mechanical strength.

It is an advantage of embodiments of the present invention that a generic interposer platform is provided, allowing interfacing and interconnection of different photonic integrated circuits and optical fibers.

It is an advantage of embodiments of the present invention that 3D polarisation maintaining waveguides can be included, straight waveguides can be included, bent (i.e., in-plane and out-of-plane) waveguides can be included, and tapered waveguides can be included, and that these allow for efficient light propagation, routing and connecting to various types of integrated circuits and optical fibers. It is an advantage of embodiments of the present invention that stringent restrictions on complex design couplings, hard-to-fabricate couplings, and large on-chip couplings can be relaxed, thus performing better than, for example, present flip-chip, direct butt-coupling and photonic wire bonding hybrid integration approaches. It is an advantage of embodiments of the present invention that a passive as well as an active packaging approach may be envisaged, e.g., using a pick-and-place assembly machine, for generating an integrated system, wherein an optical interposer is used for connecting a first optical waveguide, e.g., comprised in a first photonic integrated circuit, to a second optical waveguide, e.g., comprised in a second photonic integrated circuit, in accordance with embodiments of the present invention.

It is an advantage of embodiments of the present invention that, by using an interposer waveguide, that is for example a microstructured optical waveguide (MOW) or a GRIN optical waveguide, a mechanically robust optical interposer may be achieved that is not susceptible to contamination. It is a further advantage of embodiments of the present invention that this enables hybrid integration with all types of PICs (including buried waveguides) through active alignment, which is an alignment strategy where the power coupling between two waveguides is monitored during their mutual alignment, which allows for an iterative optimization towards the position of highest transmission, therefore having the potential to achieve good coupling efficiencies. It is still a further advantage of embodiments of the present invention that the interposer waveguide, e.g. MOW or GRIN optical waveguide, may be tuned, in the case of a MOW for example by changing the size and position of the micro-holes, to achieve, for example, polarization control and minimal bending losses.

In a first aspect, the present invention relates to an optical interposer for optically interconnecting a first optical waveguide with a second optical waveguide. The optical interposer comprises an interposer waveguide having a first end for optically connecting to the first optical waveguide and a second end for optically connecting to the second optical waveguide. The interposer waveguide is one of or a combination of a microstructured optical waveguide and a graded-index (GRIN) optical waveguide. The optical interposer further comprises an interposer substrate. The optical interposer further comprises at least one support structure rigidly connecting, i.e., mechanically connecting, the interposer waveguide to the interposer substrate, so as to form a rigid, self-sustaining optical interposer.

In advantageous embodiments, the interposer waveguide is a microstructured optical waveguide.

In embodiments, the interposer waveguide has a solid core-cladding configuration. In embodiments, the cladding and the core may be formed of a same material, which may facilitate production of these structures. It is an advantage of the core-cladding configuration that light may be confined to the core, while the combination of the core and the cladding may provide the waveguide with mechanical robustness. In particular, the total diameter of the waveguide will be larger than in an air-clad photonic wire bond. Furthermore, the cladding may protect the core from contamination or, e.g., dust on the core providing an optical leaking path for light in the core.

In embodiments, the optical interposer further comprises a first V-groove rigidly connected to the interposer substrate for receiving the first optical waveguide so as to optically connect the first optical waveguide to the interposer waveguide at said first end and/or a second V-groove rigidly connected to the interposer substrate for receiving the second optical waveguide so as to optically connect the second optical waveguide to the interposer waveguide at said second end. It is an advantage of these embodiments that V-grooves may simplify alignment of the first and second optical waveguides to the interposer waveguide. If present, the V-grooves and/or the support structures for the waveguides may be written in the same step as the waveguides themselves. Such writing may for example be done using two-photon polymerization, for example in the same material as the waveguides. Alternatively, if present, the V-grooves and/or the support structures may be pre-fabricated, e.g. using a different technique or using the same writing technique but in a different step.

In embodiments, the first end is a first tapered end for conversion of an optical mode between the first optical waveguide and the interposer waveguide. In embodiments, the second end is a second tapered end for conversion of an optical mode between the second optical waveguide and the interposer waveguide. The first and/or second tapered end are typically integral with the interposer waveguide, e.g., they may be formed in the same step during formation using two-photon direct laser writing.

In embodiments, the interposer waveguide comprises a first lens at the first end and/or a second lens at the second end. It is an advantage of these embodiments that the lenses may be added to provide free-space optical coupling between the interposer waveguide and the first and second waveguide if physical contact is not possible or not desired.

In embodiments, the first end of the interposer waveguide is located at a first side of the interposer substrate, and/or the second end of the interposer waveguide is located at a second side (i.e., different from the first side) of the interposer substrate, wherein, preferably, the second side is located laterally opposite to the first side. For example, the first end may be located at a distance, in the plane of the substrate, from the first side, and the second end may be located at a distance, in the plane of the substrate, from the second side. It is an advantage of these embodiments that alignment of the optical interposer with the first and/or second waveguide may be facilitated, in particular when the first and/or second waveguide are fixed on a substrate. For example, the optical interposer may be configured for having good optical coupling between the optical interposer and the first and/or second waveguide, e.g., comprised in a photonic integrated circuit, when optical waveguide and interposer waveguide contact each other. For example, when the interposer substrate, and the substrate of the first and/or second waveguide, the interposer waveguide and the first and/or second optical waveguide may physically contact each other. Furthermore, lateral alignment may be achieved by mating features on the interposer substrate, and the substrate of the first and/or second waveguide, or by ridges on a subsurface on which the substrates are located for guiding the interposer substrate, and the substrate of the first and/or second waveguide. This is, however, not essential, and instead, alignment may be achieved by introducing a light beam through the first and/or second waveguide, through the optical interposer, and optimizing the optical throughput by tuning the alignment.

In embodiments, a first distance between the first end of the interposer waveguide and the interposer substrate is larger than a second distance between the second end of the interposer waveguide and the interposer substrate. This is, however, not required, and instead, the first distance and the second distance may be the same. It is an advantage of embodiments of the present invention that the interposer waveguide may have any shape: for example, the interposer waveguide may be straight or bended. The bends may enable connecting a first optical waveguide and a second optical waveguide that are at different heights, using out-of-plane bends, or at same heights, using in-plane bends.

In embodiments, the interposer substrate may comprise any material suitable for sustaining the support structure and the interposer waveguide, such as a silicon wafer or glass.

In embodiments, the at least one support structure is configured for minimizing any optical loss from the waveguide to the at least one support structure. For example, the contact surface between the support structure and the interposer waveguide is preferably small. In embodiments, the width of the at least one support structure, in a direction perpendicular to the direction of propagation of light through the interposer waveguide, at the point where the at least one support structure contacts the interposer waveguide, may be a fraction of a width of the interposer waveguide.

In a second aspect, the present invention relates to an integrated system comprising a first optical waveguide, a second optical waveguide, and the optical interposer according embodiments of the first aspect of the present invention. Herein, the first end of the interposer waveguide of the optical interposer is optically connected to the first optical waveguide and the second end of the interposer waveguide of the optical interposer is optically connected to the second optical waveguide.

In embodiments, the first optical waveguide is comprised in a first photonic integrated circuit, and the second optical waveguide is comprised in a second photonic circuit. It is an advantage of embodiments of the present invention that the optical interposer may optically interconnect photonic integrated circuits. In embodiments, the optical interposer may be configured for having good optical coupling between the optical interposer and the first and/or second photonic integrated circuit when the interposer substrate, and the substrate of the first and/or second photonic integrated circuit, contact each other. In embodiments, the first photonic integrated circuit physically contacts the interposer substrate, and the second photonic integrated circuit physically contacts the interposer waveguide.

In embodiments, the first optical waveguide physically contacts the interposer waveguide, and the second optical waveguide physically contacts the interposer waveguide. These embodiments may result in good optical coupling between the interposer waveguide, and the first and/or second optical waveguide.

In a third aspect, the present invention relates to a method for forming a rigid, self-sustaining optical interposer for optically interconnecting a first optical waveguide to a second optical waveguide. The method comprises a step a of obtaining an interposer substrate, and a two-photon polymerizable material over the interposer substrate. The method further comprises a step b of focusing a laser beam in the two-photon polymerizable material so as to induce two-photon polymerization of part of the two-photon polymerizable material, so as to form an interposer waveguide, e.g. being one or a combination of a microstructured optical waveguide and a GRIN optical waveguide, rigidly connected to the interposer substrate by at least one support structure formed during step b or previously introduced on the interposer substrate. The method further comprises a step c of removing at least part of the, preferably all, non-polymerized two-photon polymerizable material over the interposer substrate.

The two-photon polymerizable material may be any type of two-photon polymerizable material. For example, commercially available photoresins may be used, such as IP-Dip and IP-Dip2 (Nanoscribe GmbH), with which a good resolution may be obtained. This may be especially advantageous for obtaining the small channels in the microstructured optical waveguide configuration. Alternatively, for example IP-S, IP-Visio, IP-n162, IP-L, or OrmoComp (Micro Resist Technology) could be used, but these are mainly used for larger structures to be printed with a lower magnification objective, hence leading to a lower resolution.

In some embodiments, when the interposer waveguide is a microstructured optical waveguide, the waveguide is formed with evacuation side channels, fluidically connecting microstructures (e.g., holes and capillaries) of the microstructured optical waveguide, through sidewalls of the microstructured optical waveguide, with an environment of the microstructured optical waveguide. It is an advantage of these embodiments that any non-polymerized two-photon polymerizable material present in the microstructures after step b may be relatively straightforwardly removed from the microstructures through the evacuation side channels. Furthermore, the diameter of microstructures may be large. However, this is not essential, and instead, non-polymerized two-photon polymerizable material may be removed from microstructures, e.g., capillaries, through ends of the microstructured optical waveguide. In embodiments, step c comprises ultrasonic stirring so as to remove the non-polymerized two-photon polymerizable material from the microstructures.

In some embodiments, the interposer waveguide may be a GRIN optical waveguide.

In embodiments, the interposer substrate is obtained on a moveable platform, wherein step b comprises moving the moveable platform.

In a fourth aspect, the present invention relates to a method for forming an integrated system. The method comprises a step i of obtaining an optical interposer comprising an interposer waveguide having a first end and a second end, an interposer substrate, and at least one support structure rigidly connecting the micro-structured optical waveguide to the interposer substrate, so as to form a rigid, self-sustaining optical interposer. The interposer waveguide may be one or a combination of a microstructured optical waveguide and a GRIN optical waveguide. Furthermore, the method comprises a step ii of optically connecting the first end to a first optical waveguide. Furthermore, the method comprises a step iii of optically connecting the second end to a second optical waveguide.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic front view of an example of an optical interposer in accordance with embodiments of the present invention.
FIG. 2 is a schematic top view of an example of an optical interposer in accordance with embodiments of the present invention.
FIG. 3 is a schematic side view of an example of an optical interposer in accordance with embodiments of the present invention.
FIG. 4 is a schematic front view of two different optical interposers, wherein the interposer waveguides are located at different heights, in accordance with embodiments of the present invention.
FIG. 5 is a schematic front view of an example of an optical interposer comprising a V-groove in accordance with embodiments of the present invention.
FIG. 6 is a schematic top view of an example of an optical interposer connected to a first and a second optical waveguide in accordance with embodiments of the present invention.
FIG. 7 is a schematic top view of an example of an optical interposer comprising tapered ends connected to a first and a second optical waveguide in accordance with embodiments of the present invention.
FIG. 8 is a schematic top view of an example of an optical interposer comprising tapered ends, that are uptapers, and a bend connected to a first and a second optical waveguide in accordance with embodiments of the present invention.
FIG. 9 is a schematic top view of an example of an optical interposer connecting a multi-core optical waveguide to three single-core optical waveguides in accordance with embodiments of the present invention.
FIG. 10 is a schematic top view of an example of an optical interposer comprising tapered ends, comprising an uptaper and a downtaper, connected to a first and a second optical waveguide in accordance with embodiments of the present invention.
FIG. 11 is a schematic top view of an example of an optical interposer comprising tapered ends, that are downtapers, connected to a first and a second optical waveguide in accordance with embodiments of the present invention.
FIG. 12 is a schematic top view of an example of an optical interposer comprising lenses optically connected to a first and a second optical waveguide in accordance with embodiments of the present invention.
FIG. 13 is a schematic side view of an interposer substrate, support structures, and V-grooves for use in a method for forming an optical interposer in accordance with embodiments of the present invention.
FIG. 14 is a schematic side view of an interposer substrate, support structures, V-grooves and two-photon polymerizable material over the interposer substrate for use in a method for forming an optical interposer in accordance with embodiments of the present invention.
FIG. 15 is a schematic side view of an interposer substrate, support structures, V-grooves, an interposer waveguide, and two-photon polymerizable material over the interposer substrate formed in a method for forming an optical interposer in accordance with embodiments of the present invention.
FIG. 16 is a schematic side view of an optical interposer formed in a method for forming an optical interposer in accordance with embodiments of the present invention.
FIG. 17 is a schematic side view of a subsurface, an optical interposer, a first optical fiber and second optical fiber for forming an integrated system in a method in accordance with embodiments of the present invention.
FIG. 18 is a schematic side view of an integrated system formed in a method in accordance with embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

Whereas in the following most examples are shown with microstructured optical waveguides resulting in advantageous systems, embodiments are not limited thereto, but can also be implemented with graded-index optical waveguides. Such graded-index optical waveguides may be graded-index core-cladding configurations. These may be made of a single material in a single 2PP fabrication run by making use of refractive index variations induced by accurate modulation of the laser power during the fabrication process. In a first aspect, the present invention relates to an optical interposer for optically interconnecting a first optical waveguide with a second optical waveguide. The optical interposer comprises an interposer waveguide having a first end for optically connecting to the first optical waveguide and a second end for optically connecting to the second optical waveguide. The interposer waveguide is a microstructured optical waveguide. The optical interposer further comprises an interposer substrate. The optical interposer further comprises at least one support structure rigidly connecting, i.e., mechanically connecting, the interposer waveguide to the interposer substrate, so as to form a rigid, self-sustaining optical interposer.

In a second aspect, the present invention relates to an integrated system comprising a first optical waveguide, a second optical waveguide, and the optical interposer according embodiments of the first aspect of the present invention. Herein, the first end of the optical interposer is optically connected to the interposer waveguide of the first optical waveguide and the second end of the optical interposer is optically connected to the interposer waveguide of the second optical waveguide.

The present invention may be used for interconnecting various optical waveguides, with different mode field sizes, including single-core and multi-core optical fibers and photonic integrated circuit (PIC) waveguides of various material platforms.

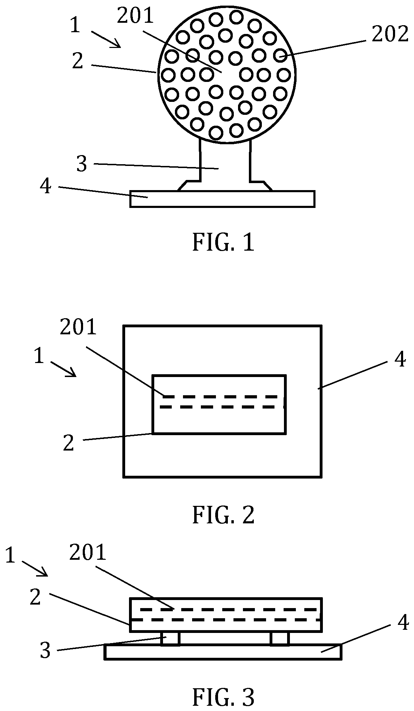

Reference is made to FIG. 1, which is a schematic front view of an example of an optical interposer 1 in accordance with embodiments of the present invention, comprising an interposer waveguide 2, an interposer substrate 4, and a support structure 3 rigidly connecting the interposer waveguide 2 to the interposer substrate 4. Simultaneously, reference is made to FIG. 2 and FIG. 3, which are a schematic top view and side view, respectively, of the same optical interposer 1. The microstructured optical waveguide 2 is supported by the support structure 3, which makes the microstructured optical waveguide 2 robust and securely attached to the substrate 4. In this example, the microstructured optical waveguide 2 is connected to the substrate 4 by two support structures 3. However, more support structures 3 could be used, which could improve mechanical robustness. Alternatively, a single support structure 3 could be used, e.g., running along substantially the complete length of the microstructured optical waveguide 2.

The interposer waveguide 2 in one example is a microstructured optical waveguide 2, made of a solid core 201 or a hollow core surrounded by air holes 202 which lower the effective refractive index of the material around the core 201. Alternatively, the core can be a non-solid core, such as for example a hollow core. The microstructured optical waveguide 2 may have similar properties as microstructured optical fibers. For example, the air hole pattern can be circular, hexagonal, or elliptical, the invention not being limited to any pattern, and may be arranged in various ways in the microstructured optical waveguide 2 to tailor the light confinement and guidance properties. For example, an asymmetric air hole distribution may be used to make the microstructured optical waveguide 2 polarization maintaining. Furthermore, the air hole size and distribution may be tailored to allow very low bending losses in the microstructured optical waveguide 2.

In this example, the first end of the interposer waveguide 2 is located at a first side of the interposer substrate 4, and/or wherein the second end of the interposer waveguide 2 is located at a second side of the interposer substrate 4, wherein the second side is located laterally opposite to the first side.

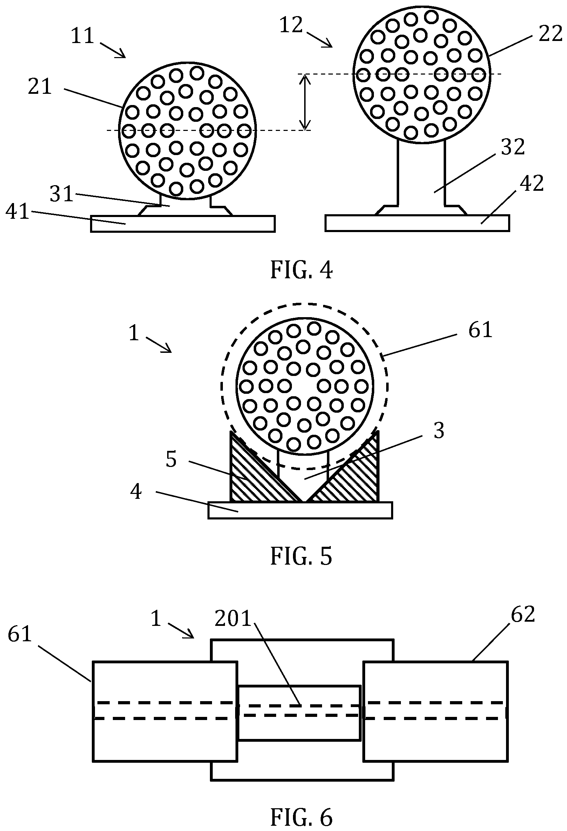

Reference is made to FIG. 4, which is a schematic front view of a first optical interposer 11 and a second optical interposer 12 in accordance with embodiments of the present invention. The support structure 31 of the first optical interposer 11 is shorter than the support structure 32 of the second optical interposer 12. As such, a distance between the first optical waveguide 21 and the first substrate 41 of the first optical interposer 11, is shorter than a distance between the second optical waveguide 22 and the second substrate 42 of the second optical interposer 12. It is an advantage of embodiments of the present invention, that full spatial freedom in the three dimensions for routing these optical waveguides may be achieved, and as such the implementation is not limited to planar interconnecting first and second optical waveguides. For example, the interposer can accommodate a height difference between the first and second optical waveguides that are to be interconnected.

Reference is made to FIG. 5. Furthermore, mechanical support structures such as V-grooves 5 can monolithically be included on the interposer to allow positioning of a first optical waveguide 61 with respect to the optical interposer 1. Instead of V-grooves 5, also other mechanical support structures, configured for supporting a first or second optical waveguide, could be used as known in the art. The V-grooves 5, the support structure 3, and the interposer substrate 4 may form a monolithic structure, which may, for example, be formed using 3D printing. The monolithic structure may result in a robust optical interposer 1 that may be moved as a whole without risking moving any of the parts of the optical interposer 1.

Reference is made to FIG. 6, which is a schematic top view of an optical interposer 1, optically interconnecting a first optical waveguide 61 with a second optical waveguide 62. The optical interposer 1 may be used to interconnect two optical waveguides 61 and 62, e.g., fibers. Dimensions of the core 201 of the microstructured optical waveguide 2 are typically matched to the mode size of the optical waveguides 61 and 62. A physical contact connection can be made with or without index-matching material between the optical waveguides 61 and 62 and the microstructured optical waveguide 2 of the optical interposer 1.

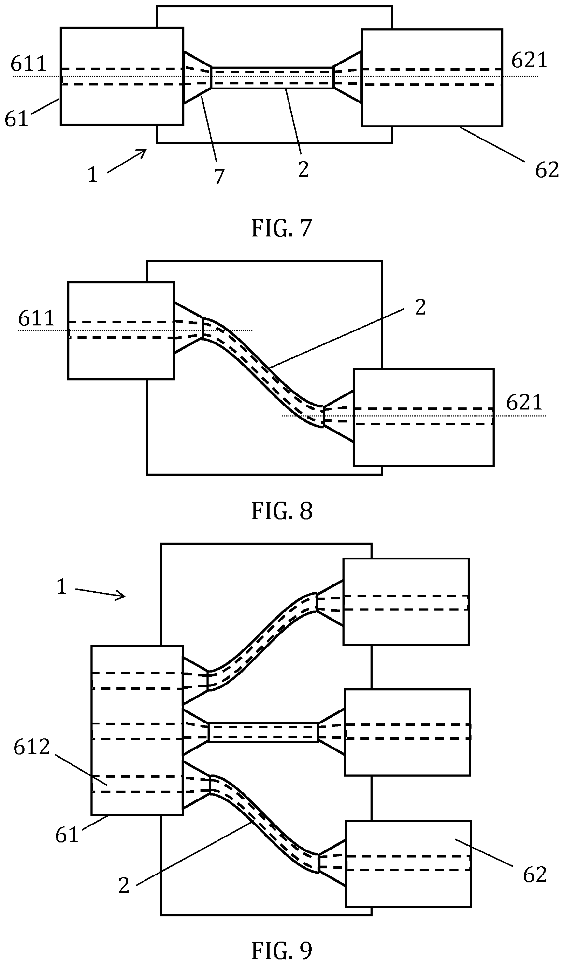

Reference is made to FIG. 7. The optical interposer 1 may also comprise mode conversion tapers 7, as an interfacing structure to achieve a minimal coupling loss between the mode of the optical waveguides 61 and 62 and the mode of the microstructured optical waveguide 2 of the optical interposer 1. Also in this case a physical connection between the taper 7 and the fiber is possible. The mode conversion tapers 7 may formed integral with the microstructured optical waveguide 2, which may provide further mechanical robustness to the optical interposer 1, but may also be formed separately, e.g., on ends of a microstructured optical waveguide 2. The optical axis 611 of the first optical waveguide 61 and the optical axis 621 of the second optical waveguide 62 may be aligned, in which case a linear microstructured optical waveguide 2 may be preferred.

Reference is made to FIG. 8. In this example, the optical axis 611 of the first optical waveguide 61 and the optical axis 621 of the second optical waveguide 62 are not aligned. To enable optical interconnection between the optical axis 611 of the first optical waveguide 61 and the optical axis 621 of the second optical waveguide 62, i.e., for in-plane shifts of the optical axis, a tight bend may be created in the interposer waveguide 2. Notice that an out-of-plane shift in optical axis is also possible (cfr. FIG. 4), or a combination of in-plane shifts and out-of-plane shifts. Microstructured optical waveguides 2 may be particularly well-suited for bends.

Reference is made to FIG. 9. In this example, the first optical waveguide 61 is a multicore fiber, having three distinct cores 612. The first optical waveguide 61 is interfaced to a set of second optical waveguides 62, that are, in this example, single-core optical fibers, using an optical interposer 1 in accordance with embodiments of the present invention. As such, in this example, the optical interposer 1 comprises three interposer waveguides 2 interconnecting the first optical waveguide 61 with each of the three second optical waveguides 62.

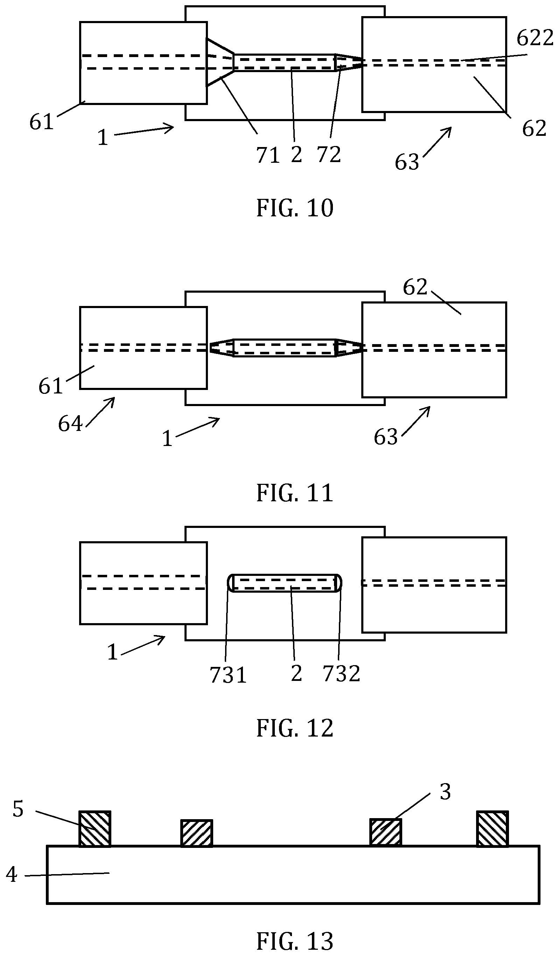

Reference is made to FIG. 10. Another application of the optical interposer 1 in accordance with embodiments of the present invention would be the interfacing of a second optical waveguide 62 of an photonic integrated circuit 63 (wherein the core 622 of the second optical waveguide 62 is indicated) with a first optical waveguide 61 that is an optical fiber. There are many different types of materials used for photonic integrated circuit 63, such as Si, SiN, and InP, each of which has its own structural geometry and corresponding mode field diameter of the optical waveguide 62 integrated on the photonic integrated circuit 63. Mode conversion may be provided by the optical interposer 1 using tapers, i.e., a first tapered end 71 at a first end of the interposer waveguide 2, which, in this example, is an uptaper to increase the mode field diameter, and a second tapered end 72 at a second end of the interposer waveguide 2, which, in this example, is a downtaper to reduce the mode field diameter. Again, a physical contact connection is possible as opposed to the standard use of lensed fibers, which require a free-space connection between the fiber and the chip. This physical contact connection ultimate leads to a much more robust packaged device.

Reference is made to FIG. 11. The optical interposer 1 may, furthermore, be used for interconnecting a first optical waveguide 61 of a first photonic integrated circuit 64 with a second optical waveguide 62 of a second photonic integrated circuit 63.

Reference is made to FIG. 12. Also a free-space coupling approach may be achieved by integrating a first lens 731 on a first end and/or a second lens 732 on a second end of the interposer waveguide 2. The lenses 731 and 732 may be monolithically integrated into the optical interposer 1, e.g., may be formed when forming the interposer waveguide 2. Such lenses may be custom designed.

In a third aspect, the present invention relates to a method for forming a rigid, self-sustaining optical interposer for optically interconnecting a first optical waveguide to a second optical waveguide. The method comprises a step a of obtaining an interposer substrate, and a two-photon polymerizable material over the interposer substrate. The method further comprises a step b of focusing a laser beam in the two-photon polymerizable material so as to induce two-photon polymerization of part of the two-photon polymerizable material, so as to form an interposer waveguide that is one or a combination of a microstructured optical waveguide and a graded-index optical waveguide, rigidly connected to the interposer substrate by at least one support structure formed during said step b or previously introduced on the support structure. The method further comprises a step c of removing at least part of the, preferably all, non-polymerized two-photon polymerizable material over the interposer substrate.

Reference is made to FIG. 13, which is a schematic representation of a side view of a setup comprising an interposer substrate 4, two support structures 3 on the interposer substrate 4, and mechanical support structures, which are, in this example, V-grooves 5. The interposer substrate 4, the two support structures 3 and the V-grooves 5 may be separate structures that have been assembled with each other. Preferably, however, the interposer substrate 4, the two support structures 3 and the V-grooves 5 may be integrally formed, e.g., using 3D printing.

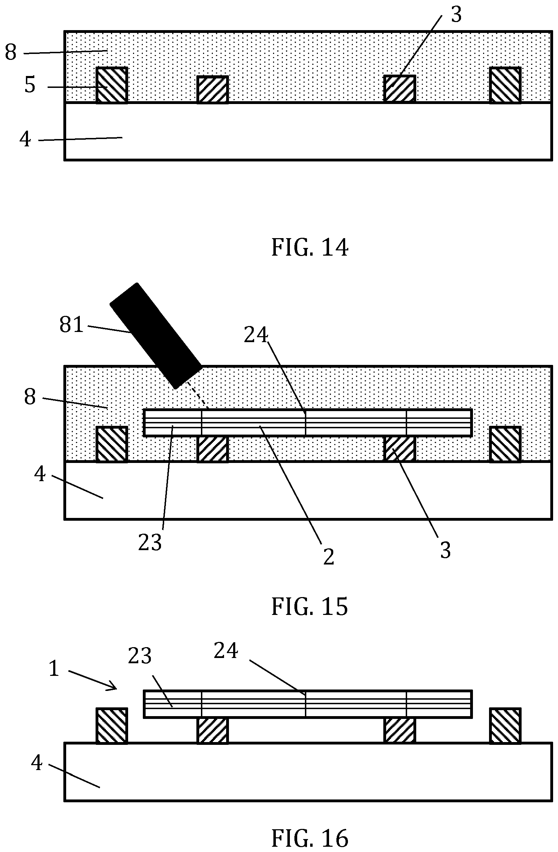

Reference is made to FIG. 14, which is a schematic representation of a side view of the setup, wherein a two-photon polymerizable material 8 has been deposited over the interposer substrate 4, over the two support structures 3, and over the V-grooves 5. The two-photon polymerizable material 8 is at least present at locations where the interposer waveguide is to be formed.

Reference is made to FIG. 15. A laser 81 suitable for inducing two-photon polymerization in the two-photon polymerizable material 8 may be focused inside the two-photon polymerizable material 8 so as to induce a two-photon polymerization reaction in the two-photon polymerizable material 8 so as to form an interposer waveguide 2 in the two-photon polymerizable material 8. Herein, the laser beam may be moved so as to two-photon polymerize the two-photon polymerizable material 8 so as to form the interposer waveguide 2. Alternatively, the substrate 4 may be located on a moveable platform (not shown), which allows movement of the two-photon polymerizable material 8, with respect to the laser beam, so as to form the interposer waveguide 2. The interposer waveguide 2 that is formed is a microstructured optical waveguide comprising microstructures, in this example capillaries 23 running from a first end to a second end of the interposer waveguide 2. The interposer waveguide 2 further comprises side channels 24 running from the capillaries 23 to sides of the interposer waveguide 2. In some embodiments, dip-in laser lithography may be used whereby the objective lens is positioned in the polymerizable material.

Reference is made to FIG. 16. Subsequently, non-polymerized two-photon polymerizable material (i.e., two-photon polymerizable material not transformed into the interposer waveguide 2) still present over the interposer substrate 4 may be removed by any method known in the art, e.g., by rinsing. Ultrasonic stirring may be applied to remove any unpolymerized two-photon polymerizable material. The side channels 24 may facilitate removal of any unpolymerized two-photon polymerizable material from the capillaries 23. After the removal of unpolymerized two-photon polymerizable material still present over the interposer substrate 4, an optical interposer 1 has been made.

In a fourth aspect, the present invention relates to a method for forming an integrated system. The method comprises a step i of obtaining an optical interposer comprising an interposer waveguide having a first end and a second end, wherein the interposer waveguide is one of or a combination of a microstructured optical waveguide and a graded-index optical waveguide, an interposer substrate, and at least one support structure rigidly connecting the micro-structured optical waveguide to the interposer substrate, so as to form a rigid, self-sustaining optical interposer. Furthermore, the method comprises a step ii of optically connecting the first end to a first optical waveguide. Furthermore, the method comprises a step iii of optically connecting the second end to a second optical waveguide.

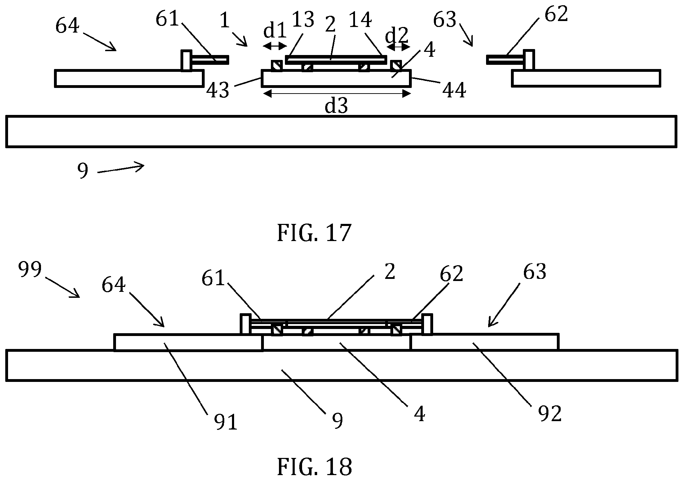

Reference is made to FIG. 17. An optical interposer 1 is provided together with, in this example, a first device 64 comprising a first optical fiber 61, and a second device 63 comprising a second optical fiber 62. A subsurface 9 is provided on which the optical interposer 1, the first device 64 and the second device 63 are to be positioned and optically interconnected. It may be observed that a first end 23 of the interposer waveguide 2 is, in this example, located at a distance d1, in the plane of the substrate, from a first side 43 of the interposer substrate 4, and the second end 24 is, in this example, located at a distance d2, in the plane of the substrate, from the second side 44, that is for example within a fraction of the distance d3, in the plane of the substrate, from the first side 43 to the second side 44. This may limit the area, i.e., footprint, that is required by the optical interposer 1, without limiting the structural integrity of the interposer waveguide 2. FIG. 17 illustrates the situation for an optical interposer between two optical fibers. Embodiments of the present invention also may relate to an optical interposer between one optical fiber and an embedded waveguide, or an optical interposer between two embedded waveguides. In the case of embedded waveguides, the first respectively second device may for example be a first respectively second photonic integrated circuit or another device comprising a waveguide for inputting or outputting an optical signal.

Reference is made to FIG. 18. The optical interposer 1, the first device 64 and the second device 63 are positioned on the subsurface 9 such that a first end of the interposer waveguide 2 is connected to the first device 64, and a second end of the interposer waveguide 2 is connected to the second device 63. Thereby, an integrated system 99 is obtained. In this example, the substrate 4 of the optical interposer 1, a substrate 91 of the first device 64 and a substrate 92 of the second device 63 are configured such that, when the substrates 4, 91 and 92 physically contact each other, optical coupling between the first optical waveguide 91, the interposer waveguide 2, and the second optical waveguide 92 has been achieved. In addition, means (not shown in the figure) for laterally (i.e., in a direction perpendicular to the plane of the paper) aligning the substrates 4, 91 and 92 so as to achieve lateral optical coupling between the first optical waveguide 91, the interposer waveguide 2, and the second optical waveguide 92 may also be included on the subsurface 9.

It is to be understood that although preferred embodiments, specific constructions and configurations, as well as materials, have been discussed herein for devices according to the present invention, various changes or modifications in form and detail may be made without departing from the scope of this invention. Steps may be added or deleted to methods described within the scope of the present invention.

## Claims

1. An optical interposer (1) for optically interconnecting a first optical waveguide (61) with a second optical waveguide (62), the optical interposer (1) comprising:
an interposer waveguide (2) having a first end for optically connecting to the first optical waveguide (61) and a second end for optically connecting to the second optical waveguide (62), wherein the interposer waveguide (2) is one of or a combination of a microstructured optical waveguide and a graded-index optical waveguide,
an interposer substrate (4), and
at least one support structure (3) rigidly connecting the interposer waveguide (2) to the interposer substrate (4), so as to form a rigid, self-sustaining optical interposer (1).

2. The optical interposer according to claim 1, wherein the interposer waveguide is a microstructured optical waveguide.

3. The optical interposer (1) according to any of the previous claims, wherein the interposer waveguide (2) has a core-cladding configuration, e.g. a solid core-cladding configuration.

4. The optical interposer (1) according to any of the previous claims, further comprising a first V-groove (5) rigidly connected to the interposer substrate (4) for receiving the first optical waveguide (61) so as to optically connect the first optical waveguide (2) to the interposer waveguide (4) at said first end and/or a second V-groove (5) rigidly connected to the interposer substrate (4) for receiving the second optical waveguide (62) so as to optically connect the second optical waveguide (62) to the interposer waveguide (2) at said second end.

5. The optical interposer (1) according to any of the previous claims, wherein the first end is a first tapered end (71) for conversion of an optical mode between the first optical waveguide (61) and the interposer waveguide (2), and wherein the second end is a second tapered end (72) for conversion of an optical mode between the second optical waveguide (62) and the interposer waveguide (2).

6. The optical interposer (1) according to any of claims 1 to 4, wherein the interposer waveguide (2) comprises a first lens (731) at the first end and/or a second lens (732) at the second end.

7. The optical interposer (1) according to any of the previous claims, wherein the first end of the interposer waveguide (2) is located at a first side of the interposer substrate (4), and wherein the second end of the interposer waveguide (2) is located at a second side of the interposer substrate (4), wherein the second side is located laterally opposite to the first side.

8. The optical interposer (1) according to any of the previous claims, wherein a first distance between the first end of the interposer waveguide and the interposer substrate (4) is larger than a second distance between the second end of the interposer waveguide and the interposer substrate (4).

9. An integrated system (99) comprising:
a first optical waveguide (61),
a second optical waveguide (62), and
the optical interposer (1) according to any of the previous claims, wherein the first end of the interposer waveguide (2) of the optical interposer (1) is optically connected to the first optical waveguide (61) and wherein the second end of the interposer waveguide (2) of the optical interposer (1) is optically connected to the second optical waveguide (62).

10. The integrated system (99) according to claim 9, wherein the first optical waveguide (61) is comprised in a first photonic integrated circuit (64), and wherein the second optical waveguide (62) is comprised in a second photonic circuit (63).

11. The integrated system (99) according to claim 9 or 10, wherein the first optical waveguide (61) physically contacts the interposer waveguide (2), and wherein the second optical waveguide (62) physically contacts the interposer waveguide (2).

12. A method for forming a rigid, self-sustaining optical interposer (1) for optically interconnecting a first optical waveguide (61) to a second optical waveguide (62), comprising:
a. obtaining:
an interposer substrate (4),
and
a two-photon polymerizable material (8) over the interposer substrate (4),
b. focusing a laser beam in the two-photon polymerizable material (8) so as to induce two-photon polymerization of part of the two-photon polymerizable material (8), so as to form an interposer waveguide (2) that is one of or a combination of a microstructured optical waveguide and a graded-index optical waveguide, rigidly connected to the interposer substrate (4) by at least one support structure (3) formed during said focusing or previously introduced on the interposer substrate (4), and
c. removing at least part of the non-polymerized two-photon polymerizable material (8) over the interposer substrate (4).

13. The method according to claim 12, wherein the interposer substrate (4) is obtained on a moveable platform, wherein step b comprises moving the moveable platform.

14. A method for forming an integrated system (99), comprising:
i. obtaining an optical interposer (1) comprising:
an interposer waveguide (2) having a first end and a second end, wherein the interposer waveguide (2) is one of or a combination of a microstructured optical waveguide and graded-index optical waveguide,
an interposer substrate (4), and
at least one support structure (3) rigidly connecting the micro-structured optical waveguide to the interposer substrate (4), so as to form a rigid, self-sustaining optical interposer,
ii. optically connecting the first end to a first optical waveguide (61), and
iii. optically connecting the second end to a second optical waveguide (62).
